# EUROPÄISCHE PATENTSCHRIFT

(11) **EP 2 005 116 B1**
(45) Veröffentlichungstag und Bekanntmachung des Hinweises auf die Patenterteilung: **11.05.2016**
(21) Anmeldenummer: 07723049.8
(22) Anmeldetag: 06.03.2007
(51) Int. Cl.: G01C 21/36, G08G 1/0969

(54) **NAVIGATIONSANORDNUNG UND NAVIGATIONSVERFAHREN FÜR EIN KRAFTFAHRZEUG**
NAVIGATION ASSEMBLY AND NAVIGATION METHOD FOR A MOTOR VEHICLE
SYSTÈME DE NAVIGATION ET PROCÉDÉ DE NAVIGATION DESTINÉS À UN VÉHICULE À MOTEUR

(30) Priorität: 31.03.2006 US 395705
(43) Veröffentlichungstag der Anmeldung: 24.12.2008
(73) Patentinhaber: Volkswagen Aktiengesellschaft, 38440 Wolfsburg (DE)
(72) Erfinder: STOSCHEK, Arne, Palo Alto, CA 94303 (US); NG, Brian, San Francisco, California 94107 (US); PHILIPPE, Alessandrini, Cambridge, MA 02138 (US); ROSARIO, Daniel, Santa Cruz, CA 95060 (US)
(86) Internationale Anmeldenummer: PCT/EP2007/001904
(87) Internationale Veröffentlichungsnummer: WO 2007/115614

(56) Entgegenhaltungen:
- EP-A2- 1 035 531
- WO-A-2005/124280
- US-A1- 2003 028 314
- US-A1- 2004 015 292
- US-B1- 6 336 073

## Beschreibung

Die Erfindung betrifft ein Kraftfahrzeug mit einem Navigationssystem, wobei das Navigationssystem ein Ortungssystem zur Bestimmung der Position des Kraftfahrzeuges umfasst.

Die EP 0 875 730 B1 und die DE 698 15 940 T2 offenbaren ein Landkarteninformationsanzeigegerät zur Verwendung in einer Fahrzeugnavigationsvorrichtung mit einer Datenumsetzungseinrichtung zum Erfassen von Punkten von Kartendaten entsprechend einer Landkarte von einem Standpunkt durch eine Betrachtungslinie, die von dem Standpunkt ausgeht und bezüglich der Ebene der Landkarte einen Tiefenwinkel besitzt, und zum perspektivischen Projizieren der Punkte der Kartendaten auf eine Betrachtungsebene, die senkrecht zu der Betrachtungslinie festgelegt ist und einen vorgegebenen Abstand von dem Standpunkt besitzt, um Landkarten-Anzeigedaten zu erzeugen. Dabei wird eine Ansicht einer Umgebung aus der Vogelperspektive erzeugt. Ein Navigationssystem mit einer Ansicht einer Umgebung aus der Vogelperspektive ist zudem in der FR 2634707 sowie in der Zeitschrift autoconnect 2005, Vereinigte Motor-Verlage GmbH & Co. KG, Leuschnerstr. 1, 70174 Stuttgart, Deutschland, Seiten 18 und 21 offenbart.

Die EP 0 990 119 B1 offenbart eine digitale Personal-Kommunikationsvorrichtung mit einem Prozessor, mit einem Speicher, auf den der Prozessor zugreifen kann, und mit einer Anzeige, die mit dem Prozessor verbunden ist, wobei die Anzeige Karteninformationen und eine Position der digitalen Personal-Kommunikationsvorrichtung bezüglich der Karteninformation anzeigt, wobei die Karteninformation Wegpunkte, also Koordinaten enthält, wie vom Prozessor angewiesen. Die digitale Personal-Kommunikationsvorrichtung umfasst zudem eine Eingabeeinrichtung zum Bilden von Anfragen für Karteninformation und zum Auswählen von Wegpunkten und einen GPS-Empfänger, der mit dem Prozessor verbunden ist, wobei der Prozessor so programmiert ist, dass er Informationen, die er vom GPS-Empfänger erhält, so verarbeitet, dass daraus die Position der digitalen Personal-Kommunikationsvorrichtung bestimmt wird. Außerdem umfasst die digitale Personal-Kommunikationsvorrichtung einen Sender, der mit dem Prozessor verbunden ist, wobei der Prozessor so programmiert ist, dass er Karteninformation unter Verwendung des Senders von einem Kartenspeicher und einer Übertragungsvorrichtung anfordert, dass er die Karteninformation, die er vom Kartenspeicher und der Übertragungsvorrichtung erhalten hat, weiterverarbeitet, und dass er die Verfügbarkeit zusätzlicher gespeicherter Daten für Wegpunkte im Speicher bei Auswahl einer der Wegpunkte durch die Eingabeeinrichtung bestimmt, und dass er zusätzliche gespeicherte Daten unter Verwendung des Senders von dem Kartenspeicher und der Übertragungsvorrichtung bei Auswahl eines der Wegpunkte anfordert, falls zusätzliche gespeicherte Daten nicht im Speicher verfügbar sind.

Die WO 2005/124280 A1 und die EP 1 757 904 A2 und offenbaren eine verteilte Navigationsanordnung für ein Kraftfahrzeug. Ein räumlich vom Kraftfahrzeug getrenntes off-board-Navigationssystem berechnet einen Routenvorschlag für das Kraftfahrzeug. Der Routenvorschlag wird dann mittels des off-board-Navigationssystems in eine PNG-Datenstruktur, die ein Satellitenbild oder eine 3D-Graphik darstellt, als Vektordaten integriert und in dieser Form drahtlos über eine Kommunikationsverbindung an das Kraftfahrzeug übertragen. Danach wird mittels einer Mensch-Maschine-Schnittstelle der Routenvorschlag in das Satellitenbild oder die 3D-Graphik integriert dargestellte.

Es ist Aufgabe der Erfindung, ein verbessertes Kraftfahrzeug mit einem Navigationssystem anzugeben.

Vorgenannte Aufgabe wird durch eine Navigationsanordnung für ein Kraftfahrzeug gemäß Anspruch 1 gelöst.

Ein Routenvorschlag im Sinne der Erfindung kann z.B. eine Soll-Route zu einem Ziel und/oder eine Soll-Fahrtrichtungsangabe sein.

Eine drahtlose Kommunikationsverbindung im Sinne der Erfindung kann auch einen nicht drahtlosen Anteil umfassen. Eine drahtlose Kommunikationsverbindung im Sinne der Erfindung ist insbesondere eine Kommunikationsverbindung, die zumindest zum Kraftfahrzeug drahtlos ist. Eine drahtlose Kommunikationsverbindung im Sinne der Erfindung ist insbesondere eine drahtlose Verbindung ins Internet (z.B. WLAN). Drahtlose Kommunikationsverbindungen können auch WIFI, WIMAX, RF, Mobilfunk, etc. sein. Es kann vorgesehen sein, dass - abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc.. Darüber hinaus kann ein nahtloser Übergang zwischen einem online- und einem offline-Betrieb vorgesehen sein, wobei ein Routenvorschlag ggf. mit Karteninformation auf einem on-board-Speicher abgespeichert wird.

In einer weiteren Ausgestaltung der Erfindung ist der Routenvorschlag abhängig vom aktuellen Verkehr, von Baustellen, von Wetter- bzw. Umweltbedingungen und/oder von Sichtverhältnissen. Der Routenvorschlag kann auch abhängig von persönlichen Präferenzen (interessante Routen, Landmaks, Einkaufsgebiete) sein.

In einer weiteren Ausgestaltung der Erfindung umfasst das Kraftfahrzeug ein Ortungssystem zur Bestimmung der Position des Kraftfahrzeuges, der Ausrichtung des Kraftfahrzeuges und/oder der on-board-Zeit. Dabei ist in einer weiteren Ausgestaltung der Erfindung die Position des Kraftfahrzeuges, die Ausrichtung des Kraftfahrzeuges und/oder die on-board-Zeit mittels der drahtlosen Kommunikationsverbindung an das off-board-Navigationssystem übertragbar. Die Position des Kraftfahrzeuges kann im Sinne der Erfindung auch eine Größe sein, aus der die Position des Kraftfahrzeuges ermittelbar ist, wie z.B. von dem Kraftfahrzeug empfangene GPS-Signale. Werden z.B. die von dem Kraftfahrzeug empfangenen GPS-Signale an das off-board-Navigationssystem übertragen, so ermittelt dieses die Position des Kraftfahrzeuges und die Ausrichtung des Kraftfahrzeuges sowie unter Umständen die on-board-Zeit.

In einer weiteren Ausgestaltung der Erfindung ist (mittels der Mensch-Maschine-Schnittstelle) ein Ziel eingebbar. Dieses Ziel ist in einer weiteren Ausgestaltung der Erfindung mittels der drahtlosen Kommunikationsverbindung an das off-board-Navigationssystem übertragbar. Die Zieleingabe kann z.B. alphanumerisch erfolgen. Alternativ oder zusätzlich kann die Zieleingabe auch durch Spracheingabe oder Schrifterkennung (insbesondere einer Schrifterkennung zur Identifikation asiatischer Schriftzeichen) erfolgen. Die Selektion eines Ortes kann auf einer Karte, einem Satellitenbild und/oder einer 3D-Graphik erfolgen. In diesem Fall ist in einer weiteren Ausgestaltung der Erfindung eine Zoomfunktion für die Karte, das Satellitenbild und/oder die 3D-Graphik vorgesehen. Es kann vorgesehen sein, dass ein Bediener des Kraftfahrzeuges ein bestimmtes Objekt (Restaurant, Landmark, Geschäft, Tankstelle etc.) in einem bestimmten Gebiet (Straße, Stadt, Postleitzahl, Kreis, etc.) suchen lassen kann und aus den (z.B. in einer Karte, in einem Satellitenbild und/oder in einer 3D-Graphik) angebotenen Treffern ein Navigationsziel aussuchen kann. Ausgangspunkt ist die aktuelle Position des Kraftfahrzeuges. Es kann aber auch vorsehen sein, dass der Ausgangspunkt wählbar ist.

In einer weiteren Ausgestaltung der Erfindung umfasst off-board-Navigationssystem die Funktionalität einer Suchmaschine. Dies umfasst z.B.
- die Möglichkeit, on-line nach POIs zu suchen und diese in einer Karte, in einem Satellitenbild und/oder in einer 3D-Graphik zu lokalisieren,
- die Möglichkeit, nach Läden oder Restaurants zu suchen und sich das Sortiment bzw. die Speisekarte anzuschauen,
- die Möglichkeit, nach bestimmten Gegenständen zu suchen und Läden zu finden, in denen sie angeboten werden,
- die Möglichkeit, die Präferenzen, bevorzugte Orte und/oder bevorzugte Routen eines Anwenders zu speichern, und/oder
- die Möglichkeit interessante Routen zu finden.
Entsprechende Treffer können - ggf. als Zielpunkte - Eingang in den Routenvorschlag finden.

Gemäß der Erfindung ist der Routenvorschlag mittels des off-board-Navigationssystems integriert in ein Satellitenbild oder eine 3D-Graphik darstellbar und in dieser Form an das Kraftfahrzeug übertragbar. In einer weiteren Ausgestaltung der Erfindung ist ein Satellitenbild oder eine 3D-Graphik von der Umgebung des Kraftfahrzeuges an das Kraftfahrzeug übertragbar. In einer weiteren Ausgestaltung der Erfindung umfasst die in dem Kraftfahrzeug angeordnete Mensch-Maschine-Schnittstelle eine Anzeigevorrichtung, insbesondere einen Touchscreen, zur Darstellung des Routenvorschlags integriert in ein/das Satellitenbild oder in eine/die 3D-Graphik. Dabei kann vorgesehen sein, dass ein Bediener den Blickwinkel einstellen kann (z.B. von Draufsicht über Vogelperspektive zu first-person-view und umgekehrt).

In Bezug auf die Übertragung des Routenvorschlag in ein Satellitenbild und/oder eine 3D-Graphik oder eine andere Karteninformation bzw. in Bezug auf die Übertragung von Satellitenbildern und/oder 3D-Graphikes oder anderer Karteninformationen zur Darstellung des Routenvorschlags können die im Folgenden als
- predictive catching,
- tunnel vision bzw.
- profile based prediction
bezeichneten Strategien vorgesehen werden. Beim predictive catching werden nur Satellitenbilder und/oder 3D-Graphiken oder andere Karteninformationen übertragen, die auch gebraucht werden. Befindet sich das Kraftfahrzeug z.B. in Nordamerika, so werden keine Karteninformationen über Europa übertragen. Erfindungsgemäß werden bei der Strategie "tunnel vision" nur Satellitenbilder und/oder 3D-Graphiken oder andere Karteninformationen entlang des Routenvorschlags mit hoher Informationsdichte übertragen. An der Peripherie der Route werden die Satellitenbilder und/oder 3D-Graphiken oder andere Karteninformationen dagegen mit geringer Informationsdichte übertragen. Bei der Strategie "profile based prediction" werden Satellitenbilder und/oder 3D-Graphiken oder andere Karteninformationen angepasst an die Präferenzen eines Bedieners übertragen.

Es kann vorgesehen sein, dass dem Bediener die Option angeboten wird, die vorgeschlagene Route vorab anzuschauen (Fly-Through-Modus).

Die Mensch-Maschine-Schnittstelle kann einen Touchscreen umfassen oder als Touchscreen ausgestaltet sein. Dabei kann z.B. vorgesehen sein, dass abgebildete Objekte mittels einer Drag-and-Drop-Option verschoben werden können. Auch kann eine Double-tap-Funktion zur Implementierung einer Zoomfunktion vorgesehen sein.

Die Satellitenbilder können auch durch zusätzliche Informationen, wie z.B. Straßen, Straßennamen bzw. -bezeichnungen, Gebäude, Fahrzeuge, Verkehrsinformationen, (ggf. customized) POIs, call-out-boxes, Raststätten etc. überlagert bzw. ergänzt werden. Besondere Hinweise auf Raststätten oder Parkplätze können z.B. dann vorgesehen werden, wenn eine bestimmte Lenkdauer überschritten worden ist.

Es kann vorgesehen sein, dass in Bezug auf die Satellitenbilder zwischen verschiedenen Modi, wie z.B. Nachtmodus, Tagmodus, saisonal abhängige Modi, wetterabhängige Modi, etc., gewählt werden kann. Es kann auch vorgesehen sein, dass eine Karte, ein Satellitenbild und/oder eine 3D-Graphik um Informationen von on-board-Sensorik (Nigth-Vision, Straßenzustandssensorik) ergänzt wird.

Es kann auch eine follow-me-Funktion vorgesehen sein, bei der die Position eines ausgewählten anderen Kraftfahrzeuges auf einer Karte, einem Satellitenbild und/oder einer 3D-Graphik eingetragen wird.

Es kann auch vorgesehen sein, weitere Informationen, wie z.B. VW Werkstätten oder Einrichtungen, die Sonderkonditionen für VW-Kunden anbieten, auf einer Karte, einem Satellitenbild und/oder einer 3D-Graphik einzutragen.

In einer weiteren Ausgestaltung der Erfindung umfasst das Kraftfahrzeug zudem ein on-board-Navigationssystem zur Berechnung eines Routenvorschlags für das Kraftfahrzeug. In diesem Fall kann in einer weiteren Ausgestaltung der Erfindung vorgesehen sein, dass Informationen für das on-board-Navigationssystem, wie z.B. eine Straßenkarte, Einbahnstraßen, Hausnummern, Tankstellen, Points-of- Interest (POIs), Informationen über Dauerbaustellen etc. mittels der drahtlosen Kommunikationsverbindung aktualisiert werden.

In einer weiteren Ausgestaltung der Erfindung ist vorgesehen, dass das Kraftfahrzeug Betriebsinformationen des Kraftfahrzeuges (mittels der drahtlosen Kommunikationsverbindung) sendet bzw. (mittels der drahtlosen Kommunikationsverbindung) an das off-board-Navigationssystem überträgt. Eine Betriebsinformation des Kraftfahrzeuges in diesem Sinne kann z.B. der Status der Tankfüllung, der Ölstand, oder eine Information über einen Defekt sein. Wird z.B. übertragen, dass der Tank fast leer ist, so wird eine Navigation zur nächsten Tankstelle angeboten und/oder vorgesehen. Wird z.B. übertragen, dass ein bestimmter Defekt vorliegt, so wird eine Navigation zur nächsten (geeigneten) Servicestation angeboten und/oder vorgesehen.

In einer weiteren Ausgestaltung der Erfindung umfasst das Kraftfahrzeug zudem ein Ortungssystem zur Bestimmung der Position des Kraftfahrzeuges.

In einer weiteren Ausgestaltung der Erfindung ist die Position des Kraftfahrzeuges mittels der drahtlosen Kommunikationsverbindung (an das off-board-Navigationssystem) übertragbar.

In einer weiteren Ausgestaltung der Erfindung umfasst die in dem Kraftfahrzeug angeordnete Mensch-Maschine-Schnittstelle eine Anzeigevorrichtung zur Darstellung des Routenvorschlags.

In einer weiteren Ausgestaltung der Erfindung umfasst das Kraftfahrzeug ein on-board-Navigationssystem zur Berechnung eines Routenvorschlags für das Kraftfahrzeug.

Vorgenannte Aufgabe wird zudem durch ein Verfahren zur Unterstützung der Navigation eines Kraftfahrzeuges gemäß Anspruch 7 gelöst.

In einer weiteren Ausgestaltung der Erfindung wird ein Satellitenbild und/oder eine 3D-Graphik von der Umgebung des Kraftfahrzeuges an das Kraftfahrzeug übertragen.

Gemäß der Erfindung erfolgt die Ausgabe des Routenvorschlags an den Bediener des Kraftfahrzeuges durch Darstellung des Routenvorschlags integriert in ein Satellitenbild oder eine 3D-Graphik.

In einer weiteren Ausgestaltung der Erfindung wird die Position des Kraftfahrzeuges bestimmt. Dabei wird die Position des Kraftfahrzeuges in einer weiteren Ausgestaltung der Erfindung von dem Kraftfahrzeug (an das off-board-Navigationssystem) übertragen.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Die Erfindung ist für die Off-Road-Navigation geeignet.

Weitere Vorteile und Einzelheiten in Bezug auf die Erfindung ergeben sich aus der nachfolgenden Beschreibung von Ausführungsbeispielen.
- Fig. 1: zeigt ein Ausführungsbeispiel einer Navigationsanordnung für ein Kraftfahrzeug
- Fig. 2: zeigt ein Ausführungsbeispiel eines Kraftfahrzeuges mit einem Navigationssystem in einer Prinzipdarstellung;
- Fig. 3: zeigt ein Ausführungsbeispiel eines Verfahrens zur Unterstützung der Navigation eines Kraftfahrzeuges;
- Fig. 4: zeigt ein Ausführungsbeispiel einer Anzeige einer in ein Satellitenbild integrierten Route mittels eines Touchscreens;
- Fig. 5: zeigt ein weiteres Ausführungsbeispiel einer Anzeige einer in ein Satellitenbild integrierten Route mittels eines Touchscreens;
- Fig. 6: zeigt ein Ausführungsbeispiel einer Draufsicht-Darstellung einer in eine 3D-Graphik integrierten Route mittels eines Touchscreens;
- Fig. 7: zeigt ein Ausführungsbeispiel einer Vogelperspektive-Darstellung einer in eine 3D-Graphik integrierten Route mittels eines Touchscreens;
- Fig. 8: zeigt ein Ausführungsbeispiel einer Anzeige einer Eingabemaske zur Eingabe eines Start- und eines Zielortes mittels eines Touchscreens;
- Fig. 9: zeigt ein Ausführungsbeispiel einer Anzeige einer Eingabemaske zur Auswahl eines Zielortes mittels eines Touchscreens;
- Fig. 10: zeigt ein Ausführungsbeispiel einer Anzeige zur Auswahl bevorzugter Routen mittels eines Touchscreens;
- Fig. 11: zeigt ein Ausführungsbeispiel einer Anzeige einer Routenübersicht mittels eines Touchscreens;
- Fig. 12: zeigt ein Ausführungsbeispiel einer Anzeige zur Bestätigung einer Spracheingabe mittels eines Touchscreens;
- Fig. 13: zeigt ein Ausführungsbeispiel einer Anzeige eines durch Informationen ergänzten Satellitenbildes mittels eines Touchscreens; und
- Fig. 14: zeigt ein Ausführungsbeispiel eines Ausschnittes einer Anzeige eines Routenvorschlags zusammen mit einer follow-me-Funktion.

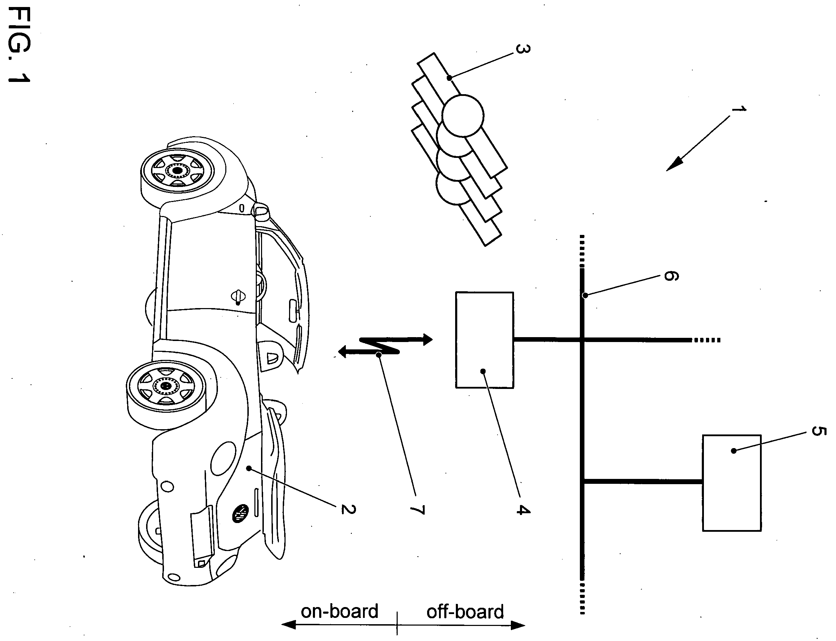

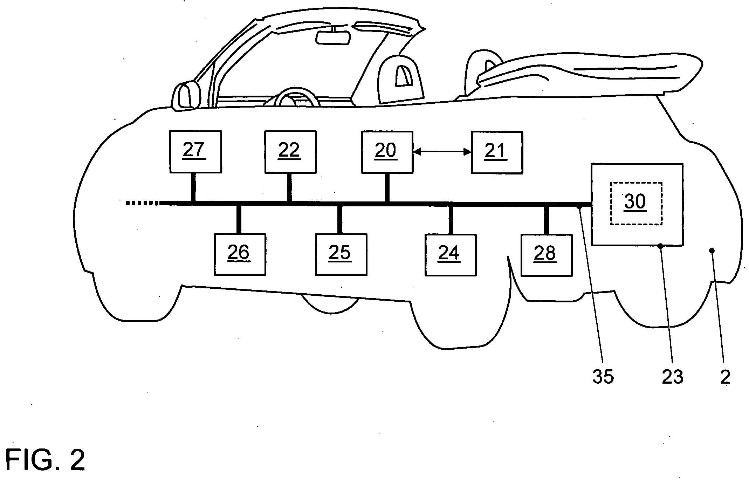

Fig. 1 zeigt ein Ausführungsbeispiel einer Navigationsanordnung 1 für ein in Fig. 2 detailliert dargestelltes Kraftfahrzeug 2. Die Navigationsanordnung 1 umfasst ein räumlich von dem Kraftfahrzeug 2 getrenntes off-board-Navigationssystem 5 zur Berechnung eines Routenvorschlags (Soll-Route zu einem Ziel und/oder Soll-Fahrtrichtungsangabe) für das Kraftfahrzeug 2. Das Kraftfahrzeug 2 kann über einen Knoten 4 mittels einer drahtlosen Kommunikationsverbindung 7 und ein Kommunikationsnetzwerk 6 mit dem off-board-Navigationssystem 5 kommunizieren. Sowohl die drahtlose Kommunikationsverbindung 7 als auch die Kombination der drahtlosen Kommunikationsverbindung 7 mit dem Kommunikationsnetzwerk 6 können ein Beispiel für eine drahtlose Kommunikationsverbindung im Sinne der Ansprüche sein. Die drahtlose Kommunikationsverbindung 7 kann WLAN, WIFI, WIMAX, RF, Mobilfunk, etc. sein. Es kann vorgesehen sein, dass - abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc.. Der Routenvorschlag kann abhängig vom aktuellen Verkehr, von Baustellen, von Wetter- bzw. Umweltbedingungen und/oder von Sichtverhältnissen sein. Der Routenvorschlag kann auch abhängig von persönlichen Präferenzen (interessante Routen, Landmaks, Einkaufsgebiete) sein.

Das Kraftfahrzeug 2 umfasst eine als Touchscreen 21 ausgestaltete Mensch-Maschine-Schnittstelle zur Ausgabe des Routenvorschlags an einen Bediener des Kraftfahrzeuges 2. Dazu ist der Touchscreen 21 mittels einer Anzeigesteuerung 20 ansteuerbar, die mittels eines Bussystems 35 mit einer Schnittstelle 22 für die drahtlose Kommunikationsverbindung 7 verbunden ist. Der Touchscreen 21 kann - wie im vorliegenden Ausführungsbeispiel - auch zur Bedienung eines Infotainmentsystems 24, eines Telefons 25 oder einer Klimaautomatik 26 genutzt werden.

Das Kraftfahrzeug 2 umfasst ein - im vorliegenden Ausführungsbeispiel in ein on-board-Navigationssystem 23 integriertes - Ortungssystem 30 zur Bestimmung der Position des Kraftfahrzeuges 2, der Ausrichtung des Kraftfahrzeuges 2 und/oder der on-board-Zeit in Abhängigkeit von von Satelliten 3 gesendeten Signalen. Die Position des Kraftfahrzeuges 2, die Ausrichtung des Kraftfahrzeuges 2 und/oder die on-board-Zeit sind mittels der drahtlosen Kommunikationsverbindung 7 an das off-board-Navigationssystem 5 übertragbar. Die Position des Kraftfahrzeuges 2 kann auch eine Größe sein, aus der die Position des Kraftfahrzeuges 2 ermittelbar ist, wie z.B. von dem Kraftfahrzeug 2 empfangene GPS-Signale. Werden z.B. die von dem Kraftfahrzeug empfangenen GPS-Signale an das off-board-Navigationssystem 5 übertragen, so ermittelt dieses die Position des Kraftfahrzeuges 2 und die Ausrichtung des Kraftfahrzeuges 2 sowie unter Umständen die on-board-Zeit.

Mittels des Touchscreens 21 ist auch ein Ziel eingebbar, das ebenfalls mittels der drahtlosen Kommunikationsverbindung 7 an das off-board-Navigationssystem 5 übertragbar ist. In Abhängigkeit der Position des Kraftfahrzeuges 2 und des gewünschten Ziels ermittelt das off-board-Navigationssystem 5 den Routenvorschlag und übermittelt ihn mittels der drahtlosen Kommunikationsverbindung 7 an das Kraftfahrzeug 2.

Der Routenvorschlag ist, insbesondere mittels des off-board-Navigationssystems 5, integriert in ein Satellitenbild oder eine 3D-Graphik darstellbar und/oder in dieser Form an das Kraftfahrzeug übertragbar bzw. mittels des Touchscreens 21 darstellbar. Dabei kann vorgesehen sein, dass ein Bediener den Blickwinkel einstellen kann (z.B. von Draufsicht über Vogelperspektive zu first-person-view und umgekehrt).

In Bezug auf die Übertragung des Routenvorschlag in ein Satellitenbild und/oder eine 3D-Graphik oder eine andere Karteninformation bzw. in Bezug auf die Übertragung von Satellitenbildern und/oder 3D-Graphiken oder anderer Karteninformationen zur Darstellung des Routenvorschlags können die im Folgenden als predictive catching, tunnel vision bzw. profile based prediction bezeichneten Strategien vorgesehen werden. Beim predictive catching werden nur Satellitenbilder und/oder 3D-Graphiken oder andere Karteninformationen übertragen, die auch gebraucht werden. Erfindungsgemäß werden bei der Strategie "tunnel vision" nur Satellitenbilder und/oder 3D-Graphiken oder andere Karteninformationen entlang des Routenvorschlags mit hoher Informationsdichte übertragen. An der Peripherie der Route werden die Satellitenbilder und/oder 3D-Graphiken oder andere Karteninformationen dagegen mit geringer Informationsdichte übertragen. Bei der Strategie "profile based prediction" werden Satellitenbilder und/oder 3D-Graphiken oder andere Karteninformationen angepasst an die Präferenzen eines Bedieners übertragen. Der Routenvorschlag und die Satellitenbilder und/oder die 3D-Graphiken oder andere Karteninformationen können in einem mit Bezugszeichen 28 bezeichneten Speicher abgespeichert werden.

Es kann vorgesehen sein, dass in Bezug auf die Satellitenbilder zwischen verschiedenen Modi, wie z.B. Nachtmodus, Tagmodus, saisonal abhängige Modi, wetterabhängige Modi, etc., gewählt werden kann. Es kann auch vorgesehen sein, dass eine Karte, ein Satellitenbild und/oder eine 3D-Graphik um Informationen von on-board-Sensorik 27 (Nigth-Vision, Straßenzustandssensorik) ergänzt wird.

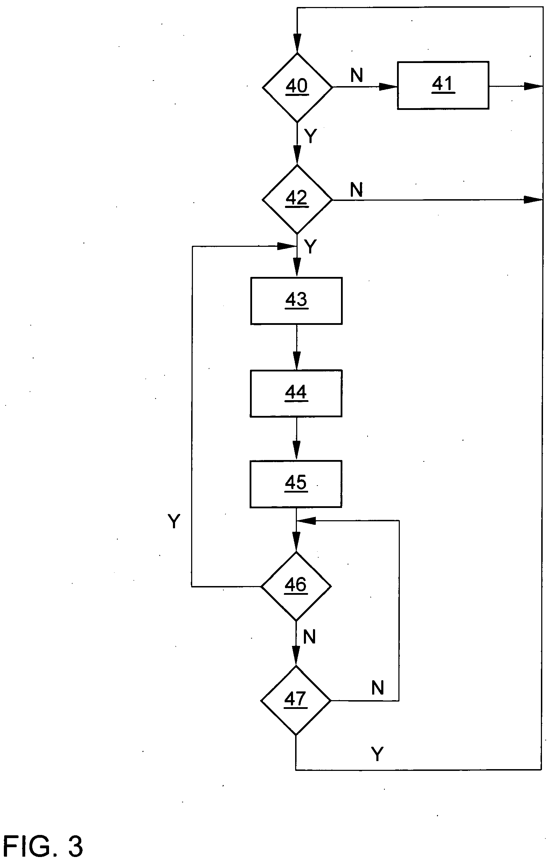

Fig. 3 zeigt ein vereinfachtes Ausführungsbeispiel eines Verfahrensablaufs zur Unterstützung der Navigation des Kraftfahrzeuges 2, insbesondere ein Ausführungsbeispiel eines Verfahrensablaufs zum Betrieb der Navigationsanordnung 1. Der Verfahrensablauf beginnt mit einer Abfrage 40, ob die Kommunikationsverbindung 7 zum off-board-Navigationssystem 5 zur Verfügung steht. Steht die Kommunikationsverbindung 7 zum off-board-Navigationssystem 5 nicht zur Verfügung, so folgt der Abfrage 40 ein Schritt 41, der die Bedienung des on-board-Navigationssystems ermöglicht. Steht die Kommunikationsverbindung 7 zum off-board-Navigationssystem 5 dagegen zur Verfügung, so folgt der Abfrage 40 eine Abfrage 42, ob eine Zieleingabe erfolgt.

Erfolgt keine Zieleingabe, so folgt der Abfrage 42 erneut die Abfrage 40. Erfolgt dagegen eine Zieleingabe, so folgt der Abfrage 42 ein Schritt 43, in dem die Position des Kraftfahrzeuges 2 bestimmt wird und in dem das gewünschte Ziel und die Position des Kraftfahrzeuges 2 an das off-board-Navigationssystem 5 übertragen werden. Dem Schritt 43 folgt ein Schritt 44, in dem mittels des off-board-Navigationssystems 5 ein Routenvorschlag ermittelt und an das Kraftfahrzeug 2 übertragen wird. Dem Schritt 44 folgt ein Schritt 45, in dem der Routenvorschlag mittels des Touchscreens 21 angezeigt wird.

Dem Schritt 45 folgt eine Abfrage 46, ob der Routenvorschlag neu berechnet werden soll und (aufgrund der bestehenden Kommunikationsverbindung 7) neu berechnet werden kann. Soll und kann der Routenvorschlag neu berechnet werden, so folgt der Abfrage 46 der Schritt 43. Andernfalls folgt der Abfrage 46 eine Abfrage 47, ob der Verfahrensablauf abgebrochen werden soll. Soll der Verfahrensablauf abgebrochen werden, so folgt der Abfrage 46 die Abfrage 40. Andernfalls folgt der Abfrage 47 die Abfrage 46.

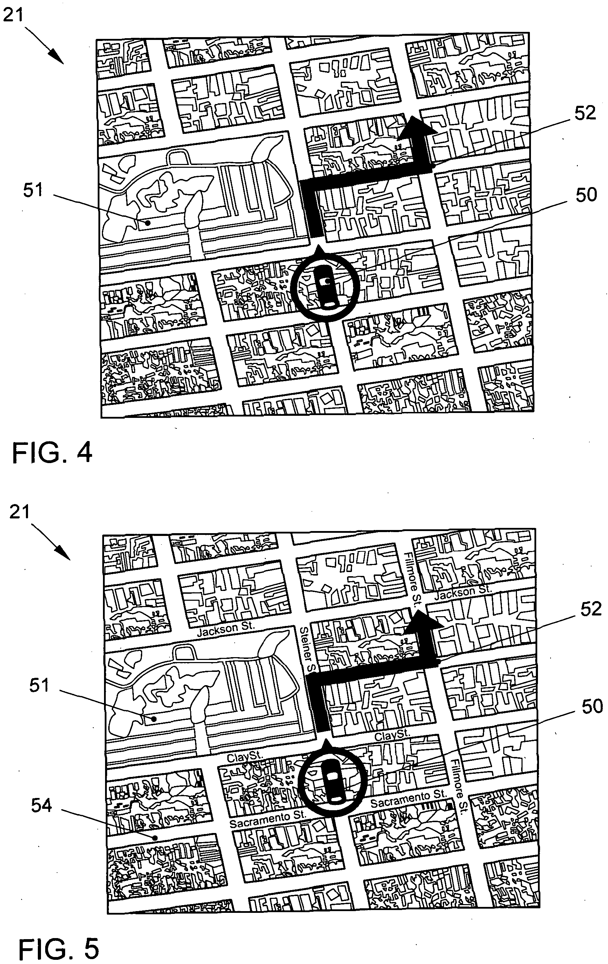

Fig. 4 zeigt ein Ausführungsbeispiel des Touchscreens 21 in einer Situation, in der die Markierung 50 und die Route 52 zusammen mit dem bzw. in dem Satellitenbild 51 dargestellt werden. Fig. 5 zeigt ein Ausführungsbeispiel des Touchscreens 21 in einer Situation, in der die Markierung 50, die Route 52 und Straßen 54 zusammen mit dem bzw. in dem mit Satellitenbild 51 dargestellt werden.

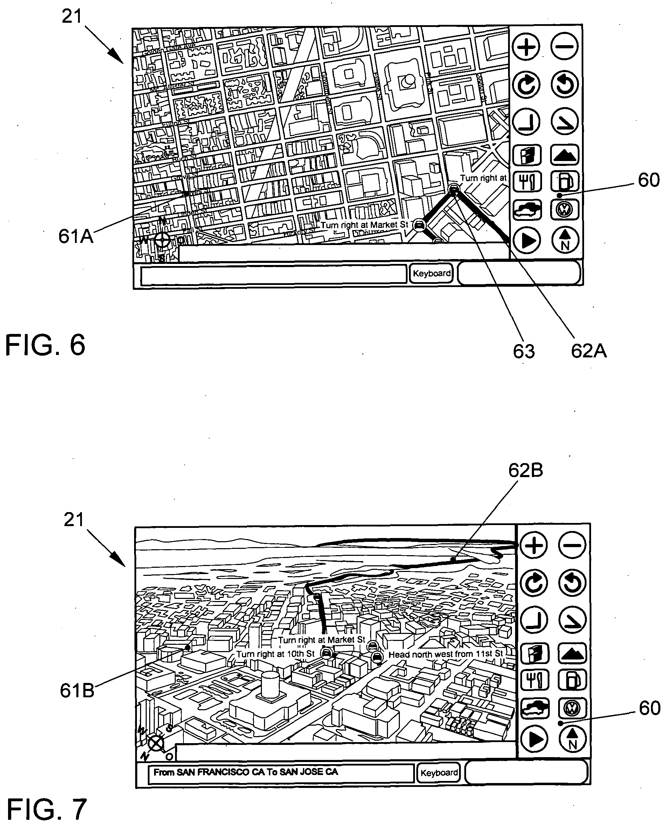

Fig. 6 zeigt ein Ausführungsbeispiel einer Draufsicht-Darstellung 61A eines in eine 3D-Graphik integrierten Routenvorschlags 62A mittels des Touchscreens 21. In dieser Darstellung können auch zusätzliche Informationen wie Points-Of-Interest (POIs) 63 eingetragen werden. Neben der Draufsicht-Darstellung 61A der 3D-Graphik ist eine Bedienleiste 60 dargestellt. Mittels dieser Bedienleiste 60 kann die Darstellung verändert werden und/oder andere und/oder zusätzliche Funktionen aktiviert bzw. bedient werden. So kann mittels der Bedienleiste 60 die in Fig. 6 gewählte Draufsicht-Darstellung 61A der 3D-Graphik - wie in Fig. 7 dargestellt - in eine Vogelperspektive-Darstellung 61 B verändert werden. Entsprechend wird der Routenvorschlag 62B in der Vogelperspektiven-Darstellung integriert dargestellt.

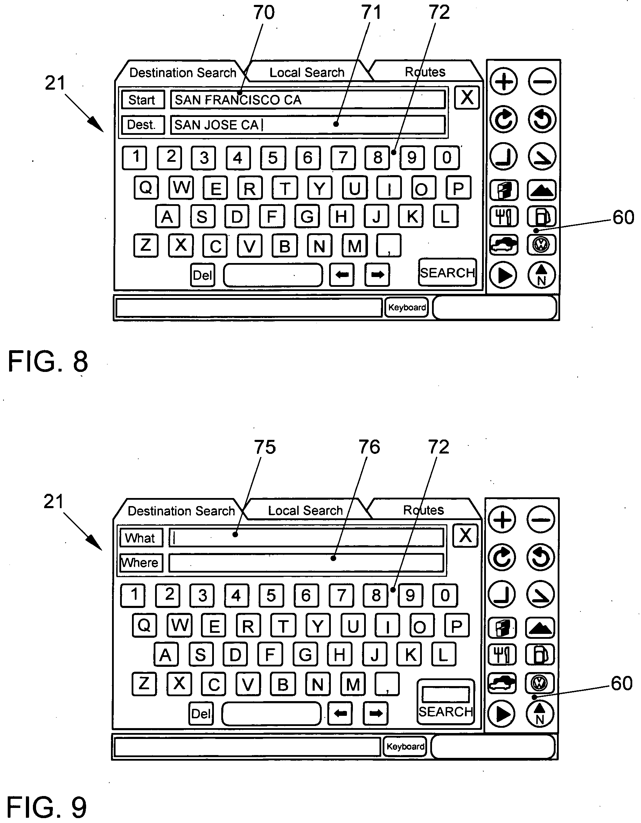

Fig. 8 zeigt ein Ausführungsbeispiel einer Anzeige einer Eingabemaske zur Eingabe eines Start- und eines Zielortes mittels des Touchscreens 21. In dem dargestellten Ausführungsbeispiel sind dazu ein Starteingabefeld 70 und Zieleingabefeld 71 vorgesehen. Die Zieleingabe kann z.B. alphanumerisch durch eine dargestellte Tastatur 72 erfolgen. Alternativ oder zusätzlich kann die Zieleingabe auch durch Spracheingabe oder Schrifterkennung (insbesondere einer Schrifterkennung zur Identifikation asiatischer Schriftzeichen) erfolgen. Die Selektion eines Ortes kann auf einer Karte, einem Satellitenbild und/oder einer 3D-Graphik erfolgen. In diesem Fall ist in einer Ausgestaltung eine Zoomfunktion für die Karte, das Satellitenbild und/oder die 3D-Graphik vorgesehen. Der Startort kann auch die aktuelle Position des Kraftfahrzeugs 2 sein.

Es kann auch vorgesehen sein, dass - wie in Fig. 9 dargestellt - ein Bediener des Kraftfahrzeuges 2 ein bestimmtes Objekt (Restaurant, Landmark, Geschäft, Tankstelle etc.) in einem bestimmten Such-Gebiet (Straße, Stadt, Postleitzahl, Kreis, etc.) suchen lassen kann. Dazu wird eine Eingabemaske mit einem Objekteingabefeld 75 zu Eingabe eines zu suchenden Objektes (Restaurant, Landmark, Geschäft, Tankstelle etc.) und ein Gebietseingabefeld 76 zu Eingabe des Such-Gebiets (Straße, Stadt, Postleitzahl, Kreis, etc.) dargestellt. Der Bediener kann anschließend einen Treffer aus den mittels dieser Suche ermittelten bzw. (z.B. in einer Karte, in einem Satellitenbild und/oder in einer 3D-Graphik) angebotenen Treffer aussuchen.

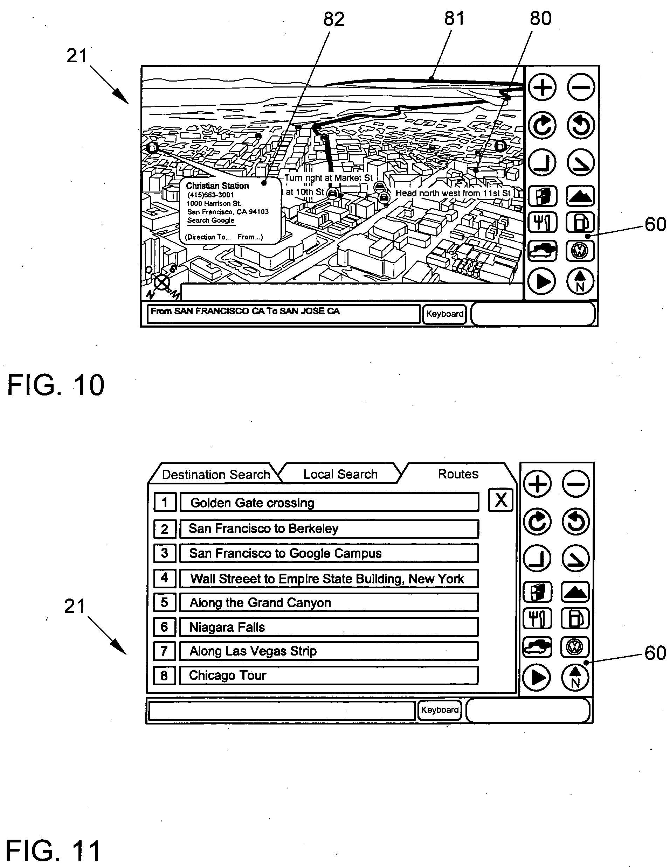

Erfolgt die Zieleingabe durch Spracheingabe so kann - wie in Fig. 10 dargestellt - eine graphische Bestätigung 82 der Spracheingabe erfolgen. Diese graphische Bestätigung 82 kann - wie in Fig. 10 dargestellt - z.B. (zeitlich begrenzt) eine Kartendarstellung überlagern. So zeigt das Ausführungsbeispiel gemäß Fig. 10 z.B. eine Vogelperspektiven-Darstellung 80 eines in eine 3D-Graphik integrierten Routenvorschlags 81 mittels des Touchscreens 21.

Es kann auch vorgesehen sein, dass bevorzugte Routen wählbar sind. So zeigt Fig. 11 ein Ausführungsbeispiel einer Anzeige zur Auswahl bevorzugter Routen mittels des Touchscreens 21.

Es kann auch eine automatische oder zumindest eine interaktiv-automatische Zielauswahl unter bestimmten Umständen vorgesehen sein. So kann vorgesehen sein, dass das Kraftfahrzeug 2 Betriebsinformationen des Kraftfahrzeuges 2 (mittels der drahtlosen Kommunikationsverbindung 7) sendet bzw. (mittels der drahtlosen Kommunikationsverbindung 7) an das off-board-Navigationssystem 5 überträgt. Eine Betriebsinformation des Kraftfahrzeuges in diesem Sinne kann z.B. der Status der Tankfüllung, der Ölstand, oder eine Information über einen Defekt sein. Wird z.B. übertragen, dass der Tank fast leer ist, so wird eine Navigation zur nächsten Tankstelle angeboten und/oder vorgesehen. Wird z.B. übertragen, dass ein bestimmter Defekt vorliegt, so wird eine Navigation zur nächsten (geeigneten) Servicestation angeboten und/oder vorgesehen.

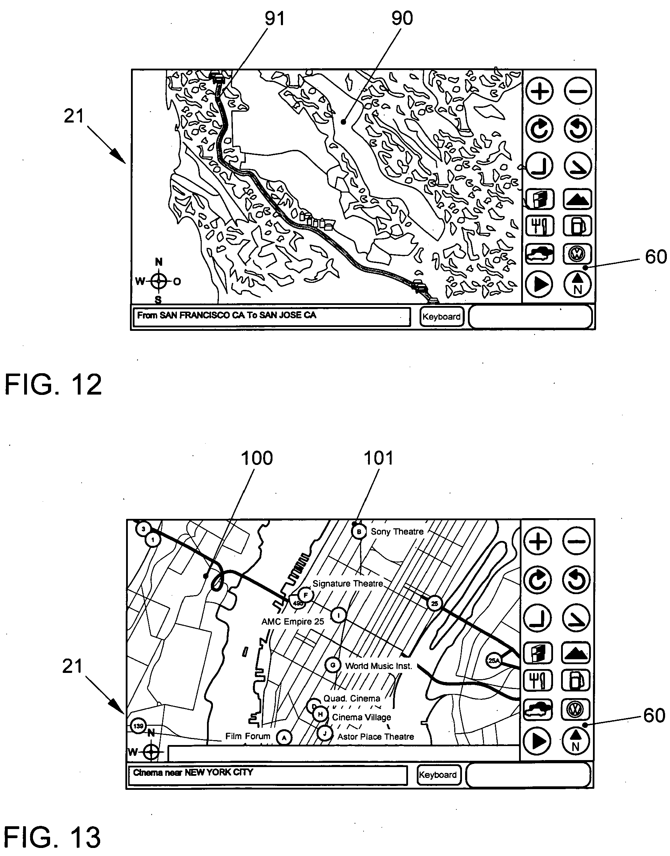

Fig. 12 zeigt ein Ausführungsbeispiel einer Anzeige einer Routenübersicht mittels des Touchscreens 21. Dabei bezeichnet Bezugszeichen 90 ein Satellitenbild und Bezugszeichen 91 einen Routenvorschlag. Die Routenübersicht kann auch, insbesondere aus der Vogelperspektive, in einem Fly-Through-Modus erfolgen.

Satellitenbilder 100 können - wie beispielhaft in Fig. 13 dargestellt - auch durch zusätzliche Informationen 101, wie z.B. Straßen, Straßennamen bzw. -bezeichnungen, Gebäude, Fahrzeuge, Verkehrsinformationen, (ggf. customized) POIs, call-out-boxes, Raststätten etc. überlagert bzw. ergänzt werden. Besondere Hinweise auf Raststätten oder Parkplätze können z.B. dann vorgesehen werden, wenn eine bestimmte Lenkdauer überschritten worden ist.

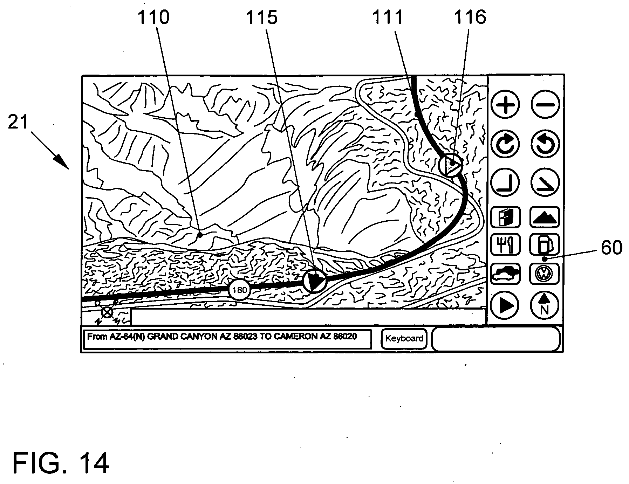

Es kann-wie in Fig. 14 dargestellt - auch eine follow-me-Funktion vorgesehen sein, bei der die Position 116 eines ausgewählten anderen Kraftfahrzeuges auf einer Karte, einem Satellitenbild und/oder einer 3D-Graphik 110, insbesondere zusammen mit der Position 115 des Kraftfahrzeuges 2, dargestellt wird. Darüber hinaus kann ein Routenvorschlag 111 dargestellt werden.

### Bezugszeichenliste

- 1: Navigationsanordnung
- 2: Kraftfahrzeug
- 3: Satellit
- 4: Knoten
- 5: off-board-Navigationssystem
- 6: Kommunikationsnetzwerk
- 7: Kommunikationsverbindung
- 20: Anzeigesteuerung
- 21: Touchscreen
- 22: Schnittstelle
- 23: on-board-Navigationssystem
- 24: Infotainmentsystem
- 25: Telefon
- 26: Klimaautomatik
- 27: on-board-Sensorik
- 28: Speicher
- 30: Ortungssystem
- 35: Bussystem
- 40, 42, 46, 47: Abfrage
- 41, 43, 44, 45: Schritt
- 50: Markierung
- 51, 90, 100: Satellitenbild
- 52: Route
- 54: Straßen
- 60: Bedienleiste
- 61A: Draufsicht-Darstellung
- 61B, 80: Vogelperspektiven-Darstellung
- 62A, 62B, 81,:
- 91, 111: Routenvorschlag
- 63: Points-Of-Interest
- 70: Starteingabefeld
- 71: Zieleingabefeld
- 72: Tastatur
- 75: Objekteingabefeld
- 76: Gebietseingabefeld
- 82: graphische Bestätigung
- 101: zusätzliche Informationen
- 110: 3D-Graphik
- 115: Position eines Kraftfahrzeuges
- 116: Position eines ausgewählten anderen Kraftfahrzeuges

## Patentansprüche

1. Navigationsanordnung (1) für ein Kraftfahrzeug (2), die Navigationsanordnung umfassend:
ein räumlich von dem Kraftfahrzeug getrenntes off-board-Navigationssystem (5) zur Berechnung eines Routenvorschlags (52, 62A, 62B) für das Kraftfahrzeug;
eine drahtlose Kommunikationsverbindung (7) zwischen dem off-board-Navigationssystem und dem Kraftfahrzeug zur Übertragung des Routenvorschlags an das Kraftfahrzeug; und
eine in dem Kraftfahrzeug angeordnete Mensch-Maschine-Schnittstelle (21) zur Ausgabe des Routenvorschlags an einen Bediener des Kraftfahrzeuges,
**dadurch gekennzeichnet, dass**
der Routenvorschlag mittels des off-board-Navigationssystems integriert in ein Satellitenbild (51) oder eine 3D-Graphik (61A, 61B) darstellbar und in dieser Form an das Kraftfahrzeug übertragbar ist, wobei nur Satellitenbilder oder 3D-Graphiken entlang des Routenvorschlags mit hoher Informationsdichte übertragen werden, und wobei an der Peripherie des Routenvorschlags die Satellitenbilder oder 3D-Graphiken mit geringer Informationsdichte übertragen werden.

2. Navigationsanordnung nach Anspruch 1, das Kraftfahrzeug umfassend:
ein Ortungssystem (30) zur Bestimmung der Position des Kraftfahrzeuges.

3. Navigationsanordnung nach Anspruch 2, wobei die Position des Kraftfahrzeuges mittels der drahtlosen Kommunikationsverbindung an das off-board-Navigationssystem übertragbar ist.

4. Navigationsanordnung nach Anspruch 1, wobei ein Satellitenbild oder eine 3D-Graphik von der Umgebung des Kraftfahrzeuges an das Kraftfahrzeug übertragbar ist.

5. Navigationsanordnung nach Anspruch 1 oder 4, wobei die in dem Kraftfahrzeug angeordnete Mensch-Maschine-Schnittstelle (21) eine Anzeigevorrichtung zur Darstellung des Routenvorschlags integriert in das Satellitenbild oder in die 3D-Graphik umfasst.

6. Navigationsanordnung nach Anspruch 1, das Kraftfahrzeug weiterhin umfassend:
ein on-board-Navigationssystem (23) zur Berechnung eines Routenvorschlags für das Kraftfahrzeug.

7. Verfahren zur Unterstützung der Navigation eines Kraftfahrzeuges (2), das Verfahren umfassend:
Übertragung eines in ein Satellitenbild (51) oder eine 3D-Graphik (61A, 61B) integrierten Routenvorschlags (52, 62A, 62B) von einem räumlich von dem Kraftfahrzeug getrennten off-board-Navigationssystem (5) an das Kraftfahrzeug mittels einer drahtlosen Kommunikationsverbindung (7),
wobei nur Satellitenbilder oder 3D-Graphiken entlang des Routenvorschlags mit hoher Informationsdichte übertragen werden, und wobei an der Peripherie des Routenvorschlags die Satellitenbilder oder 3D-Graphiken mit geringer Informationsdichte übertragen werden; und
Ausgabe (45) des Routenvorschlags an einen Bediener des Kraftfahrzeuges integriert in ein Satellitenbild oder eine 3D-Graphik.

8. Verfahren nach Anspruch 7, das Verfahren weiterhin umfassend:
Bestimmung der Position des Kraftfahrzeuges.

9. Verfahren nach Anspruch 8, das Verfahren weiterhin umfassend:
Übertragung der Position des Kraftfahrzeuges von dem Kraftfahrzeug an das off-board-Navigationssystem.

## Claims

1. Navigation arrangement (1) for a motor vehicle (2), the navigation arrangement comprising:
an off-board navigation system (5), which is physically separate from the motor vehicle, for computing a route proposal (52, 62A, 62B) for the motor vehicle;
a wireless communication link (7) between the off-board navigation system and the motor vehicle for transmitting the route proposal to the motor vehicle; and
a man/machine interface (21), which is arranged in the motor vehicle, for outputting the route proposal to a user of the motor vehicle,
**characterized in that**
the route proposal can be presented by means of the off-board navigation system in a manner integrated in a satellite image (51) or a 3D graphic (61A, 61B) and can be transmitted to the motor vehicle in this form, wherein only satellite images or 3D graphics along the route proposal having a high density of information are transmitted, and wherein at the periphery of the route proposal the satellite images or 3D graphics having a low density of information are transmitted.

2. Navigation arrangement according to Claim 1, the motor vehicle comprising:
a locating system (30) for determining the position of the motor vehicle.

3. Navigation arrangement according to Claim 2, wherein the position of the motor vehicle can be transmitted to the off-board navigation system by means of the wireless communication link.

4. Navigation arrangement according to Claim 1, wherein a satellite image or a 3D graphic can be transmitted to the motor vehicle from the surroundings of the motor vehicle.

5. Navigation arrangement according to Claim 1 or 4, wherein the man/machine interface (21) arranged in the motor vehicle comprises a display apparatus for presenting the route proposal in a manner integrated in the satellite image or in the 3D graphic.

6. Navigation arrangement according to Claim 1, the motor vehicle additionally comprising:
an on-board navigation system (23) for computing a route proposal for the motor vehicle.

7. Method for assisting the navigation of a motor vehicle (2), the method comprising:
transmission of a route proposal (52, 62A, 62B), which is integrated in a satellite image (51) or a 3D graphic (61A, 61B), from an off-board navigation system (5), which is physically separate from the motor vehicle, to the motor vehicle by means of a wireless communication link (7),
wherein only satellite images or 3D graphics along the route proposal having a high density of information are transmitted, and wherein at the periphery of the route proposal the satellite images or 3D graphics having a low density of information are transmitted; and
output (45) of the route proposal to a user of the motor vehicle in a manner integrated in a satellite image or a 3D graphic.

8. Method according to Claim 7, the method additionally comprising:
determination of the position of the motor vehicle.

9. Method according to Claim 8, the method additionally comprising:
transmission of the position of the motor vehicle from the motor vehicle to the off-board navigation system.

## Revendications

1. Système de navigation (1) destiné à un véhicule à moteur (2), le système de navigation comprenant :
un système de navigation non embarqué (5), spatialement séparé du véhicule à moteur, et destiné à calculer une proposition d'itinéraires (52, 62A, 62B) pour le véhicule à moteur ;
une liaison de communication sans fil (7) entre le système de navigation non embarqué et le véhicule à moteur pour transmettre la proposition d'itinéraires au véhicule à moteur ; et
une interface homme-machine (21) disposée dans le véhicule à moteur et destinée à délivrer la proposition d'itinéraires à un utilisateur du véhicule à moteur,
**caractérisé en ce que** la proposition d'itinéraires peut être transmise au moyen du système de navigation non embarqué d'une manière pouvant être représentée de façon intégrée dans une image de satellite (51) ou dans un graphique 3D (61A, 61B) et pouvant être transmise sous cette forme au véhicule à moteur, dans lequel seules des images de satellite ou des graphiques 3D sont transmis avec une densité d'informations élevée le long d'une proposition d'itinéraires et dans lequel les images de satellite ou les graphiques 3D sont transmis avec une densité d'informations plus faible à la périphérie d'une proposition d'itinéraires.

2. Système de navigation selon la revendication 1, le véhicule à moteur comprenant :
un système de positionnement (30) destiné à déterminer la position du véhicule à moteur.

3. Système de navigation selon la revendication 2, dans lequel la position du véhicule à moteur peut être transmise par l'intermédiaire de la liaison de communication sans fil au système de navigation non embarqué.

4. Système de navigation selon la revendication 1, dans lequel une image de satellite ou un graphique 3D de l'environnement du véhicule à moteur peut être transmis au véhicule à moteur.

5. Système de navigation selon la revendication 1 ou 4, dans lequel l'interface homme-machine (21) disposée dans le véhicule à moteur comprend un dispositif d'affichage destiné à représenter la proposition d'itinéraires de manière intégrée à l'image de satellite ou dans le graphique 3D.

6. Système de navigation selon la revendication 1, le véhicule à moteur comprenant en outre :
un système de navigation embarqué (23) destiné à calculer une proposition d'itinéraires pour le véhicule à moteur.

7. Procédé d'assistance à la navigation d'un véhicule à moteur (2), le procédé consistant à :
transmettre une proposition d'itinéraires (52, 62A, 62B) intégré à une image de satellite (51) ou à un graphique 3D (61A, 61B) depuis un système de navigation non embarqué (5), spatialement séparé du véhicule à moteur, au véhicule à moteur au moyen d'une liaison de communication sans fil (7),
dans lequel seules des images de satellite ou des graphiques 3D sont transmis avec une densité d'informations élevée le long de la proposition d'itinéraires et dans lequel les images de satellite ou les graphiques 3D sont transmis avec une densité d'informations plus faible à la périphérie de la proposition d'itinéraires ; et
délivrer (45) la proposition d'itinéraires à un utilisateur du véhicule à moteur de manière intégrée à une image de satellite ou à un graphique 3D.

8. Procédé selon la revendication 7, le procédé consistant en outre à :
déterminer la position du véhicule à moteur.

9. Procédé selon la revendication 8, le procédé consistant en outre à :
transmettre la position du véhicule à moteur depuis le véhicule à moteur au système de navigation non embarqué.
